# EUROPÄISCHE PATENTSCHRIFT

(11) **EP 0 394 721 B1**
(45) Veröffentlichungstag und Bekanntmachung des Hinweises auf die Patenterteilung: **25.01.1995**
(21) Anmeldenummer: 90106489.9
(22) Anmeldetag: 05.04.1990
(51) Int. Cl.: A23G 1/18

(54) **Verfahren und Vorrichtung zum kontinuierlichen Aufbereiten von kakaobutterhaltigen oder ähnlichen fetthaltigen Massen, insbesondere Schokoladenmasse**
Process and apparatus for the continuous treatment of masses containing cacao butter or similar, particularly chocolate
Procédé et appareil de traitement de masses contenant du beurre de cacao ou une graisse analogue, en particulier des masses de chocolat

(30) Priorität: 27.04.1989 DE 3913941
(43) Veröffentlichungstag der Anmeldung: 31.10.1990
(73) Patentinhaber: Sollich GmbH & Co. KG, D-32102 Bad Salzuflen (DE)
(72) Erfinder: Sollich, Helmut, D-2341 Rabenkirchen (DE)
(74) Vertreter: Rehberg, Elmar, Dipl.-Ing.

## Beschreibung

Die Erfindung bezieht sich auf ein Verfahren zum kontinuierlichen Aufbereiten von zu verarbeitenden kakaobutterhaltigen oder ähnlichen fetthaltigen Massen, insbesondere Schokolademasse, in einer Temperiermaschine mit einer mehrere Kühlstufen aufweisenden Kühlzone und einer mehrere Nachwärmstufen aufweisenden Nachwärmzone, durch welche die Masse hindurchgeführt und dabei in der Kühlzone gekühlt und in der Nachwärmzone wieder erwärmt wird. Die Vorrichtung zur Durchführung des Verfahrens arbeitet mit einer Temperiermaschine mit mehreren hintereinandergeschalteten Kühlstufen, die jeweils Massekammern und in diesen angeordnete Misch- und Rührelemente aufweisen und zusammen eine Kühlzone bilden, in welcher die Masse durch Wärmeaustausch an Wärmeaustauschflächen der Kühlstufen vermittels eines an einen Kühlkreislauf angeschlossenen Kühlmediums gekühlt und anschließend in eine Nachwärmzone überführt wird, die aus mehreren hintereinandergeschalteten Nachwärmstufen besteht, die jeweils Massekammern und in diesen angeordnete Misch- und Rührelemente aufweisen und zusammen die Nachwärmzone bilden, in welcher die Masse durch Wärmeaustausch an Wärmeaustauschflächen der Nachwärmstufen vermittels eines an einen Temperierkreislauf angeschlossenen Temperiermediums wieder erwärmt wird.

Ein Verfahren und eine Vorrichtung der eingangs beschriebenen Art sind aus der EP-OS 289 849 bekannt. Dabei wird die Menge des durch die Kühlstufen strömenden Kühlmediums auf einen derart gesteigerten Wert eingestellt, daß sich ein turbulenter Strömungszustand ergibt. Die Masse wird in den Massekammern der Kühlstufen durch dort angeordnete Misch- und Rührelemente derart intensiv durchmischt, daß sich hier Verwirbelung einstellt und mit einem relativ großen Schergefälle im Spalt zwischen den Wärmeaustauschflächen einerseits und den Rührwerkzeugen andererseits gearbeitet wird. Die Menge des durch die Kühlkammern umgewälzten Kühlmediums ist konstant. Das Kühlmedium wird kontinuierlich umgewälzt. Die Temperatur des Kühlmediums wird nur in einem vergleichsweise engen Temperaturbereich gesteuert bzw. geregelt. Die auf der Seite der Kühlmediums zum Einsatz kommenden Temperaturen sind absolut gesehen relativ hoch, was durch den verbesserten Wärmeübergang ermöglicht wird. Sie liegen in einem Bereich von 16 bis 22°C. Auf diese Weise wird die Masse in der Kühlzone derart gekühlt, daß sie endseitig, also am Ende der Kühlzone bzw. am Anfang der Nachwärmzone, etwa 28 bis 29°C aufweist. Dabei wird eine möglichst große Anzahl von stabilen Kristallen in β-Form erzeugt. In der sich anschließenden Nachwärmzone wird ein Temperiermedium in einem Temperierkreislauf geführt, wobei hierbei die Menge und die Temperatur des Temperiermediums konstantgehalten werden und für die verschiedensten Anwendungsfälle lediglich die Temperatur im Bereich von 31,5 bis 33°C gewählt wird. Die Masse verläßt die Nachwärmzone mit einer Temperatur in der Größenordnung zwischen 31,5 und 32,5°C. Diese Masseausgangstemperatur liegt um etwa 2°C höher als es bisher bekannt war, woraus verbesserte Weiterverarbeitungseigenschaften resultieren. Das Flächenverhältnis der Wärmeaustauschflächen der Kühlzone zu demjenigen der Nachwärmzone kann etwa in der Größenordnung 1:1 liegen, d. h. Kühlzone und Nachwärmzone können etwa gleich groß gestaltet sein. Die Anzahl der Kühlstufen in der KÜhlzone und der Nachwärmstufen in der Nachwärmzone richtet sich nach der gewünschten Nennleistung, für die die Temperiermaschine ausgelegt ist. Wenn eine solche Temperiermaschine etwa mit ihrer Nennleistung oder auch im Bereich von etwa 80 bis 110% der Nennleistung betrieben wird, stellen sich hervorragende Eigenschaften und ein guter Temperiergrad der Masse ein, wobei alljene Vorteile auftreten wie gute Kontraktion, glänzendes Aussehen, knackiger Bruch usw., die mit einem vergleichsweise hohen Anteil an stabilen Kristallen in β-Form verbunden sind. Wenn jedoch eine solche Temperiermaschine beispielsweise nur im Bereich von 40 bis 75 % ihrer Nennleistung betrieben wird, dann wird die Temperierung schlechter. Dies ist darauf zurückzuführen, daß die Temperatur des Kühlmediums in der Kühlzone höher als etwa 22°C gewählt werden muß, damit bei dem verringerten Massedurchsatz die Masse am Ende der Kühlzone nicht unterkühlt ist. Dies gilt für Verfahren, bei denen das Kühlmediums in der Kühlzone kontinuierlich umgewälzt wird. Bei Temperiermaschinen, bei denen das Kühlmedium im Auf/Zu-Betrieb diskontinuierlich umgewälzt wird, verlängern sich die Auszeiten gegenüber den Zeiten, in denen das Kühlmedium die Kühlzone durchströmt. Hierdurch entstehen Temperatursprünge und Temperiergradsprünge, die zu unterschiedlichem Bekeimungsgrad führen, weil in den Auszeiten die Temperatur des Kühlmediums auch über 22°C ansteigt. Auch insoweit läßt sich eine gute Temperierung der Masse nicht erreichen.

Andererseits sind Temperiermaschinen bekannt, bei denen die Kühlzone größer oder sogar wesentlich größer als die Nachwärmzone gestaltet ist, wobei ein Flächenverhältnis der Wärmeaustauschflächen in der Kühlzone zu denjenigen der Nachwärmzone etwa in der Größenordnung von 2:1 stehen kann. Bei diesen Temperiermaschinen ist es bekannt, die Kühlzone zu unterteilen und im Fall eines Betriebs der Temperiermaschine mit reduzierter Leistung Teile der Kühlzone eingangsseitig, also am Masseeingang in die Kühlzone, funktionsmäßig stillzulegen. Dies geschieht dadurch, daß die erste Kühlstufe der Kühlzone in den Wärmekreislauf der Schutzheizung des Einlaufrohres der Temperiermaschine mit einbezogen wird. Damit kühlen nur die nachfolgenden Kühlstufen der Kühlzone und die Wärmeaustauschfläche der Kühlzone ist damit verkleinert, so daß die Regelung des Kühlmediums ansonsten etwa erhalten bleiben kann. Damit wird auch bei reduzierter Leistung ein etwa gleich guter Bekeimungsgrad wie bei einem Betrieb mit Nennleistung erreicht.

Aus der DE-PS 25 36 063 ist eine kontinuierlich arbeitende Temperiermaschine bekannt, bei der einer Mehrzahl von einzelnen Kühlstufen eine in ihrer geometrischen Gestaltung davon abweichende Homogenisierungskammer nachgeschaltet ist, die durch einen Temperierkreislauf erwärmbar ist, so daß hier bei intensiver Durchmischung der Masse eine geringe Temperaturerhöhung stattfindet. Dabei werden die Temperaturunterschiede in der Masse ausgeglichen und eine homogene Verteilung der Kristalle in der Masse erreicht. Andererseits haben die niedrigschmelzenden Kristalle Zeit und Gelegenheit zum Ausschmelzen und Umwandeln in höherschmelzende Kristallformen.

Der Erfindung liegt die Aufgabe zugrunde, ein Verfahren und eine Vorrichtung der eingangs beschriebenen Art derart weiterzubilden, daß eine gute Temperierung mit hohem Bekeimungsgrad auch dann erreicht wird, wenn ein im Vergleich zur Nennleistung verringerter Massedurchsatz erfolgt.

Erfindungsgemäß wird dies bei dem Verfahren der eingangs beschriebenen Art dadurch erreicht, daß bei verringertem Massedurchsatz endseitig eine oder mehrere Kühlstufen von der Kühlzone abgetrennt und der Nachwärmzone zugeschlagen werden. Es werden also eine oder mehrere Kühlstufen aus dem Kühlkreislauf herausgenommen und in den Temperierkreislauf mit einbezogen. Dabei handelt es sich um solche Kühlstufen, die nicht am Anfang der Kühlzone, sondern am Ende der Kühlzone, also am Übergangsbereich zu der Nachwärmzone, vorgesehen sind. Die umschaltbaren Kühlstufen gehen somit nicht mehr für die Funktion verloren, sondern ergänzen bei verringertem Massedurchsatz die Nachwärmstufen. Es tritt somit eine Verkleinerung der Wärmeaustauschflächen und der Verweilzeit in der Kühlzone ein, während gleichzeitig relativ dazu die Wärmeaustauschflächen und die Verweilzeit der Nachwärmzone entsprechend erhöht wird. Damit ist es vorteilhaft möglich, die Temperatur des Kühlmediums in der Kühlzone in einem Bereich zwischen 16 und 22°C zu halten, so daß eine Überschreitung nach oben nicht stattfindet. Hierdurch wiederum ist es möglich, daß die Masse endseitig an der Kühlzone, also beim Eintritt in die Nachwärmzone, eine Temperatur in der Größenordnung von 28 bis 29°C aufweist, so daß die Bildung stabiler Kristallmodifikationen begünstigt ist. In der Nachwärmzone muß somit die Temperatur des Temperiermediums nur geringfügig niedriger im Vergleich zu einem Massedurchsatz gemäß Nennleistung gesteuert bzw. geregelt werden. Dabei handelt es sich in aller Regel um eine Temperaturerniedrigung in der Größenordnung von Bruchteilen eines Grads bis etwa zu 1°C. Überraschenderweise tritt bei diesem Verfahren bei verringertem Massedurchsatz im Vergleich zum Massedurchsatz gemäß Nennleistung eine noch bessere Temperierung mit höherem Bekeimungsgrad auf. Dieser Umstand kann in ganz verschiedener Weise genutzt werden: bei manchen Anwendungsfällen ist es lediglich erforderlich, eine z. B. auf Nennleistung ausgelegte Temperiermaschine nur zeitweise mit verringertem Massedurchsatz zu fahren, sei es, weil es sich um einen Anlaufvorgang in der Produktion handelt, sei es, daß wechselnde Produkte dies verlangen. Andererseits ist es aber auch möglich, besonders schwierig zu temperierende Massen in einer Art Dauerbetrieb bei insoweit verringertem Massedurchsatz gegenüber der Nennleistung der Temperiermaschine kontinuierlich zu temperieren. Ein solcher Fall kann auch dann vorliegen, wenn die Weiterverarbeitung des Produkts mit besonderen Problemen behaftet ist, beispielsweise eine sehr schnelle Kühlung nachfolgend an einen Überziehvorgang oder eine sonstige Formgebung des Produkts sich anschließen muß. Man kann also auch von vornherein, insbesondere für besondere Anwendungsfälle, eine gegenüber der fallbezogenen Nennleistung flächenmäßig an sich zu große Temperiermaschine bauen und nur mit dieser reduzierten Nennleistung betreiben, um eine hervorragende Temperierung zu erreichen.

Das erfindungsgemäße Verfahren läßt sich an sich unabhängig von dem Flächenverhältnis und dem Volumenverhältnis der Massekammern zwischen Kühlzone und Nachwärmzone anwenden. Es ist sogar dann besonders wirkungsvoll, wenn das Flächenverhältnis der Wärmeaustauschflächen der Kühlzone zu den Wärmeaustauschflächen der Nachwärmzone bei Betrieb unter Nennleistung kleiner als 1 ist, also die Kühlzone im Vergleich zur Nachwärmzone vergleichsweise groß gestaltet ist.

Von der Kühlzone können Kühlstufen mit einer solchen Wärmeaustauschfläche abgeschaltet und in die Nachwärmzone einbezogen werden, daß sich ein Flächenverhältnis der Wärmeaustauschflächen von Kühlzone zu Nachwärmzone im Bereich zwischen 3:2 bis 1:4 ergibt. Bei einem solchen Flächenverhältnis ist die Wärmetauschfläche der Nachwärmzone im Verhältnis zur Gesamtwärmeaustauschfläche ohnehin relativ groß gestaltet. Dabei kann der besondere Vorteil genutzt werden, höhere Masseausgangstemperaturen zuzulassen, was für die Verarbeitung der Masse in aller Regel vorteilhaft ist. Durch die höhere Temperatur am Ende der Kühlzone ist der Prozentsatz dort gebildeter stabiler Kristalle vergleichsweise erhöht, während in der Nachwärmzone mit der erhöhten Wärmeaustauschfläche und der vergrößerten Verweilzeit noch bessere Bedingungen geschaffen sind, daß die instabilen Kristalle aufschmelzen, während der Anteil höherschmelzender, stabiler Kristallformen nicht geschädigt wird, sondern noch weiter anwächst. Durch die Vergrößerung der Wärmeaustauschflächen in der Nachwärmzone bei reduzierter Leistung erhöht sich einmal die Verweilzeit aufgrund der größeren Wärmeaustauschfläche und andererseits zusätzlich durch den verringerten Massedurchsatz.

Die Kühlzone wird vorteilhaft mit einem Kühlmedium großer Menge betrieben, welches kontinuierlich umgewälzt wird; dabei wird bei konstanter Menge die Temperatur. des Kühlmediums gesteuert bzw. geregelt. Es wird die Auf/Zu-Regelung, wie sie im Stand der Technik durchgängig angewendet wird, verlassen. Über die große, kontinuierlich umgewälzte Kühlwassermenge wird eine hohe Geschwindigkeit des Kühlmediums in der Kühlzone erreicht und somit verbesserte Bedingungen für den Wärmeaustausch unter Anwendung von Turbulenz herbeigeführt. Dies gilt sowohl für den Betrieb bei Nennleistung wie auch bei verringertem Massedurchsatz. Wenn dann die Wärmeaustauschfläche in der Kühlzone bei verringertem Massedurchsatz verringert wird, muß die Temperatur des Kühlmediums entweder nur geringfügig höher oder sogar im Vergleich zur Nennleistung unverändert gesteuert bzw. geregelt werden, um die angestrebte Vorkristallisation am Ende der Kühlzone zu erreichen.

Die Nachwärmzone wird mit einem Temperiermedium großer Menge betrieben, welches ebenfalls kontinuierlich umgewälzt wird; dabei wird die Menge und die Temperatur des Temperiermediums konstantgehalten. Da die Temperatur am Masse am Eintritt in die Nachwärmzone konstant ist, ergibt sich damit auch eine konstante Masseendtemperatur am Ende der Nachwärmzone, die im Vergleich zu angewendeten Temperaturen im Stand der Technik durchaus höher sein kann. Auch auf der Seite des Temperiermediums in der Nachwärmzone wird der Wärmeaustausch durch turbulente Strömungsbedingungen verbessert. Auch auf der Masseseite kann sowohl in der Kühlzone wie auch in der Nachwärmzone durch Misch- und Rührelemente eine äußerst intensive Verwirbelung eintreten, bei der örtliche Überhitzungen oder Unterkühlungen der Masse vermieden werden und andererseits die Bildung von Mikrokristallen begünstigt und das Wachsen zu Makrokristallen verhindert wird.

Bei der erfindungsgemäßen Temperiermaschine sind endseitig von der Kühlzone eine oder mehrere Kühlstufen von dem Kühlkreislauf abtrennbar und in den Temperierkreislauf der Nachwärmzone einschaltbar. Damit werden sämtliche Wärmeaustauschflächen auch dann sinnvoll genutzt, wenn die Temperiermaschine nur mit verringerter Leistung betrieben wird. Die Leistungsreduzierung kann in einer oder auch in mehreren Stufen erfolgen, d. h. es kann entweder nur eine einzige Kühlstufe am Übergang zur Nachwärmzone umschaltbar sein. In der Regel reicht dies aus, um in sinnvoller Weise einen ersten Bereich zu schaffen, in dem die Temperiermaschine etwa zwischen 75 und 110 % Nennleistung betrieben wird, während das Umschalten auf den verringerten Massedurchsatz für einen Betrieb mit etwa 40 bis 75 % Nennleistung erforderlich ist.

Die Wärmeaustauschfläche der von der Kühlzone abtrennbaren Kühlstufe oder Kühlstufen können eine solche relative Größe aufweisen, daß sich bei verringertem Massedurchsatz ein Flächenverhältnis der Wärmeaustauschflächen von Kühlzone zu Nachwärmzone im Bereich zwischen 3:2 bis 1:4 ergibt. Mit anderen Worten wird nach der Umschaltung eine Wärmeaustauschfläche in der Nachwärmzone betrieben, die zwischen 40 und 80 % der Gesamtwärmeaustauschfläche ausmacht. Weil die Wärmeaustauschfläche der Nachwärmzone somit durchaus auch erheblich größer als die Wärmeaustauschfläche in der Kühlzone sein kann und sich im übrigen nicht nur ein Einfluß über die Fläche, sondern auch über das Volumen ergibt. Die Verweilzeiten in der Nachwärmzone werden in doppelter Weise gesteigert.

Besonders vorteilhaft ist es, wenn jede Kühlstufe der Kühlzone und jede Nachwärmstufe der Nachwärmstufe hinsichtlich ihrer Wärmeaustauschfläche, des Volumens der Massekammern und der Ausbildung und Anordnung der Misch- und Rührelemente übereinstimmend ausgebildet sind. Damit ist sichergestellt, daß die umschaltbare Kühlstufe problemlos auch als Nachwärmstufe und umgekehrt betrieben werden kann. Es versteht sich, daß die Größe der nicht-umschaltbaren Kühlstufe oder Kühlstufen zu der Größe der umschaltbaren Kühlstufen gleich oder unterschiedlich gewählt werden kann.

Jede umschaltbare Kühlstufe und die endseitig vorangehende nicht-umschaltbare Kühlstufe ist hier mit einem Fühler für die Temperatur der Masse ausgestattet, die wahlweise an einen Temperaturregler anschließbar sind, der ein Magnetventil im Zulauf des Kühlmediums an den Kühlkreislauf steuert. Das Magnetventil ist also nicht im Kühlkreislauf angeordnet, sondern im Bereich des Zulaufs des Kühlmediums, also in der Regel im Bereich des Frischwasserzulaufs. Der jeweils eingesetzte Fühler gibt die Temperatur der Masse am Ausgang der jeweiligen Kühlzone und damit am Eingang in die jeweilige Nachwärmzone wieder. Auch bei verringertem Massedurchsatz soll die Masse am Übergang zwischen Kühlzone und Nachwärmzone möglichst die gleiche Temperatur aufweisen wie bei einem Betrieb unter Nennleistung.

Am Eingang des Kühlmediums zu jeder umschaltbaren Kühlstufe ist ein an den Kühlkreislauf angeschlossenes Magnetventil vorgesehen, während am Ausgang des Kühlmediums jeder umschaltbaren Kühlstufe je ein zum Rücklauf des Temperiermediums führendes Drei/Zwei-Wege-Magnetventil vorgesehen ist. Damit erhöht sich der Bauaufwand an Ventilen und zugehörigen Leitungsverbindungen nicht mehr als unbedingt notwendig. Die Magnetventile und die Fühler für die Temperatur der Masse können über einen Leistungsschalter gemeinsam umschaltbar sein, so daß eine Fehlbedienung unmöglich wird.

Die Erfindung wird anhand bevorzugter Ausführungsbeispiele weiter verdeutlicht und beschrieben. Es zeigen:
- Figur 1: eine schematische Darstellung wesentlicher Teile der Temperiermaschine einschließlich der zugehörigen Schaltung,
- Figur 2: eine schematisierte Darstellung einer Kühlzone mit einer umschaltbaren Kühlstufe und
- Figur 3: eine schematisierte Darstellung einer Temperiersäule mit einer Kühlzone, die zwei umschaltbare Kühlstufen aufweist.

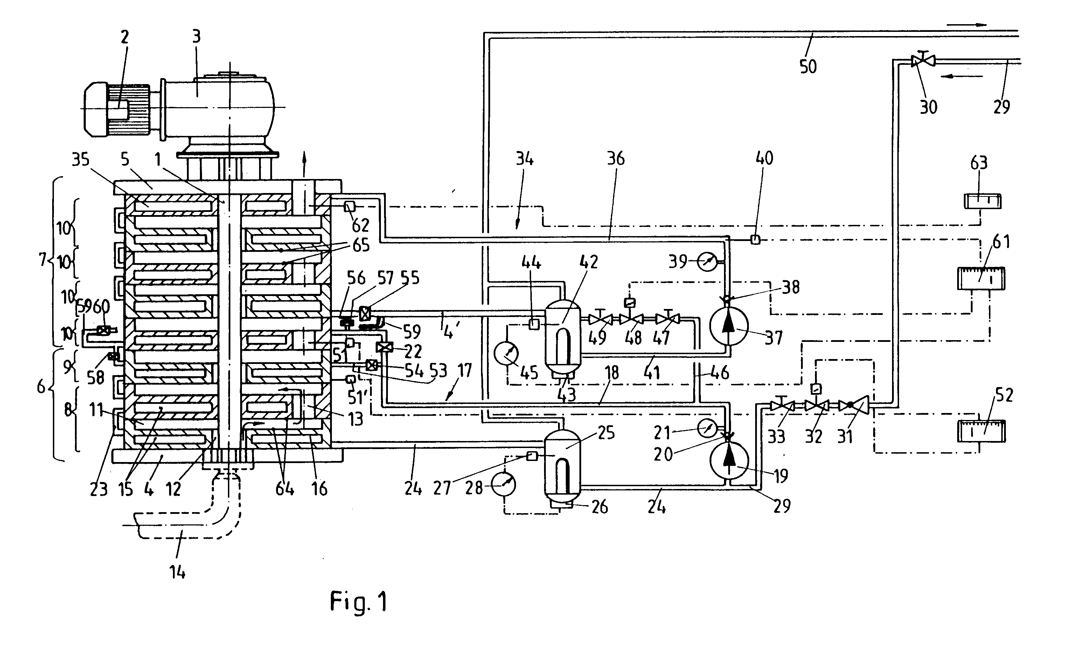

Die in Figur 1 dargestellte Vorrichtung weist eine Temperiersäule mit im wesentlichen zylindrischer Gestalt auf, die mittig von einer Antriebswelle 1 durchsetzt wird, die von einem Motor 2 über ein Getriebe 3 angetrieben wird. Zwischen einer Bodenplatte 4 und einer Deckplatte 5 sind eine Mehrzahl scheibenartiger Körper angeordnet, die mit Ausnahme des obersten Körpers identische Ausbildung aufweisen. Ein Teil dieser Körper bildet eine Kühlzone 6. Die sich nach oben anschließenden Körper bilden insgesamt eine Nachwärmzone 7. Die Kühlzone 6 ist in zwei Kühlstufen 8 und 9 unterteilt, die zwar auf identisch ausgebildeten, ringförmigen Körpern aufbauen, hier beispielsweise jedoch so geschaltet sind, daß die Kühlstufe 8 aus zwei solchen ringförmigen Körpern und die Kühlstufe 9 nur aus einem solchen Körper besteht. Die Kühlstufe 9 bildet somit das Ende der Kühlzone 6. Sie ist in die Nachwärmzone 7 umschaltbar, wie nachfolgend noch erläutert wird. Die Kühlstufe 8, die eingangsseitig an der Kühlzone 6 beginnt, ist nicht umschaltbar. Die Nachwärmzone 7 setzt sich aus einer Mehrzahl von Nachwärmstufen 10 zusammen, die im wesentlichen bzw. etwa der Unterteilung der ringförmigen Scheiben entsprechen können. In den scheibenartigen Körpern der Kühlstufen 8 und 9 sowie der Nachwärmstufen 10 sind Massekammern 11 gebildet, in denen nicht dargestellte Misch- und Rührwerkzeuge vorgesehen sind, die auf der Antriebswelle 1 sitzen und über diese kontinuierlich angetrieben werden. Es sind zwei Arten von scheibenförmigen Körpern jeweils abwechselnd aufeinander gestapelt, so daß sich, wie dargestellt, aufeinanderfolgend Durchlaßöffnungen 12 und 13 ergeben. Die Durchlaßöffnungen 12 sind auf kleinem Radius im Anschluß an die Antriebswelle 1 vorgesehen, während die Druchlaßöffnungen 13 auf großen Radius angeordnet sind. Auf diese Weise wird die Masse gezwungen, sämtliche Bereiche der Massekammern 11 zu durchlaufen. Die zu temperierende Masse tritt über ein Rohr 14 und eine nicht dargestellte Massepumpe am unteren Ende über die Durchlaßöffnung 12 in die erste Massekammer 11 der Kühlstufe 8 ein und gelangt dann über die Durchlaßöffnung 13 in die zweite Massekammer 11 der Kühlstufe 8 usw. In den Kühlstufen 8 und 9 sind von den Massekammern 11 getrennte Kammern 15 gebildet, die von einem Kühlmedium 16 eines Kühlkreislaufs 17 im Gegenstrom durchströmt werden. Der Kühlkreislauf 17 weist eine Vorlaufleitung 18 auf, die von einer Pumpe 19 zu der Kammer 15 der endseitigen umschaltbaren Kühlstufe 9 führt. In dieser Vorlaufleitung 18 sind der Pumpe 19 nachgeschaltet ein Rückschlagventil 20, ein Manometer 21 sowie ein Absperrventil 22 vorgesehen. Über Verbindungsleitungen 23 stehen die Kammern 15 benachbarter scheibenförmiger Körper in Verbindung. In einer Rücklaufleitung 24 des Kühlkreislaufs 17 ist ein Mischbehälter 25 angeordnet, in welchem das Kühlmedium über eine Heizung 26 gesteuert von einem Fühler 27 und ein Kontaktthermometer 28 in der Wärmephase beheizt werden kann. Zu dem Kühlkreislauf 17 führt eine Frischwasserleitung 29, in der ein Handabsperrventil 30, ein Druckminderventil 31, ein Magnetventil 32 und eine weiteres Handabsperrventil 33 vorgesehen sind.

Es ist ein Temperierkreislauf 34 vorgesehen, in welchem ein Temperiermedium 35, in der Regel ebenfalls Wasser, durch die Kammern 15 der Nachwärmstufen 10 im Gegenstrom geführt wird. Der Temperierkreislauf 34 weist eine Vorlaufleitung 36 auf, die von einer Pumpe 37 zu der Kammer 15 der obersten Nachwärmstufe 10 führt. In der Vorlaufleitung 36 sind ein Rückschlagventil 38, ein Manometer 39 und ein Fühler 40 für die Temperatur des Temperiermediums 35 vorgesehen. Das Temperiermedium 35 wird über Verbindungsleitungen 23 im Gegenstrom durch die Stufen 10 bzw. die dort vorgesehenen Kammern 15 geführt. Am Beginn der ersten Nachwärmstufe 10 der Nachwärmzone 7 ist eine zur Pumpe 37 zurückführende Rücklaufleitung 41 vorgesehen, in der ein Mischbehälter 42 angeordnet ist. Der Mischbehälter ist mit einer Heizung 43 versehen, die über einen Fühler 44 und ein Kontaktthermometer 45 gesteuert wird. Von der Vorlaufleitung 18 des Kühlkreislaufs 17 führt eine Anschlußleitung 46 zu dem Mischbehälter 42 des Temperierkreislaufs 34, in der ein Durchflußmengenregulierventil 47, ein Magnetventil 48 und ein Handabsperrventil 49 vorgesehen sind. Beide Mischbehälter 25 und 42 verfügen über eine Überlaufleitung 50.

Am Ende der umschaltbaren Kühlstufe 9 sitzt ein in eine Durchlaßöffnung 13 einragender Fühler 51, der die Temperatur der Masse an dieser Stelle mißt und über eine elektrische Leitung mit einem Temperaturregler 52 verbunden ist, der das Magnetventil 32 in der Frischwasserleitung 29 steuert, so daß auf diese Art und Weise über Zugabe von Frischwasser die Temperatur des Kühlmediums 16 im Kühlkreislauf 17 abgesenkt werden kann. Über die Heizung 26 kann die Temperatur angehoben werden. Die im Kühlkreislauf 17 umgewälzte Menge des Kühlmediums 16 und damit die Geschwindigkeit in den Kammern 15 der Kühlstufen 8 und 9 ist konstant. Auch am Ende der nicht-umschaltbaren Kühlstufe 8 ist ein Fühler 51′ vorgesehen, der hier in die Durchlaßöffnung 12 an der dargestellten Stelle einragt und im Bedarfsfall die Temperatur der Masse mißt. Die Fühler 51 und 51′ sind wahlweise auf den Temperaturregler 52 schaltbar, und zwar je nach dem, ob die Temperiermaschine mit voller Leitung betrieben wird, bei der die Kühlstufe 9 Bestandteil der Kühlzone 6 ist, oder bei verminderter Leistung und vermindertem Massedurchsatz, bei dem die umschaltbare Kühlstufe 9 als erste Nachwärmstufe den Nachwärmstufen 10 der Nachwärmzone 7 zugeschaltet ist. Demzufolge ist auch ein Vorlaufleitungsstück 53 mit einem Handabsperrventil 54 darin von der Vorlaufleitung 18 zu der endseitigen Kammer 15 der Kühlstufe 8 geführt. Durch wechselweises Öffnen und Schließen der Handabsperrventile 22 und 54 wird das Kühlmedium 16 also entweder in die Kühlstufe 9 oder in die Kühlstufe 8 geleitet. In der Rücklaufleitung 41 des Temperierkreislaufs 34 ist ein Handabsperrventil 55 vorgesehen. In einer Brückenleitung 56, die die Rücklaufleitung 41 mit der Vorlaufleitung 18 verbindet, ist ein weiteres Handabsperrventil 57 vorgesehen. Durch wechselweises Öffnen und Schließen der Handabsperrventile 55 und 57 strömt das Temperiermedium 35 entweder aus der erste Nachwärmstufe 10 über die Rücklaufleitung 41 zurück zum Mischbehälter 42 oder in die umgeschaltete Kühlstufe 9. In der Verbindungsleitung 23 der umschaltbaren Kühlstufe 9 ist ein Handabsperrventil 58 und in einer Rückleitung 59 ein Handabsperrventil 60 vorgesehen. Durch wechselweises Öffnen und Schließen der Handabsperrventile 58 und 60 ist es möglich, entweder das Kühlmedium aus der Kühlstufe 9 in die Kühlstufe 8 zu leiten oder das Temperiermedium in die Rücklaufleitung 41 des Temperierkreislaufs 34 einzuspeisen.

Der Fühler 40 in der Vorlaufleitung 36 des Temperierkreislaufs 34 ist mit einem Temperaturregler 61 verbunden, der das Magnetventil 48 in der Anschlußleitung 46 steuert, so daß hierüber die Temperatur des Temperiermediums 35 in der Vorlaufleitung 36 geregelt werden kann. Dies geschieht in der Regel im Sinne einer Erniedrigung der Temperatur des Temperiermediums, weil die Temperatur des Kühlmediums beim Temperieren niedriger ist als die Temperatur des Temperiermediums. Eine Erhöhung der Temperatur kann über die Heizung 43 im Mischbehälter 42 erfolgen. Ein Fühler 62 arbeitet mit einer Anzeigevorrichtung 63 zusammen, die die Masseausgangstemperatur am Ende der Nachwärmzone 7 anzeigt, also die Verarbeitungstemperatur, die die Masse nach der Temperierung aufweist.

Es ist damit ersichtlich, daß die Temperiermaschine etwa in einem Bereich von 75 bis 110% ihrer Nennleitung so betrieben wird, daß sich die Kühlzone 6 aus den beiden Kühlstufen 8 und 9 zusammensetzt, während die Nachwärmzone 7 von den Nachwärmstufen 10 gebildet wird. Wird jedoch die Temperiermaschine mit verringerter Leistung und dementsprechend geringerem Massedurchsatz betrieben, beispielsweise im Bereich von 40 bis 75 % der Nennleistung, dann erfolgt die Umschaltung der Kühlstufe 9, die als erste Nachwärmstufe 10 der Nachwärmzone 7 zugeschlagen wird. Hierdurch werden die Wärmeübergangsflächen 64 in der Kühlzone 6 vermindert und gleichzeitig die Wärmeübergangsflächen 65 in der Nachwärmzone 7 vergrößert. Gleiches kann auch tendenzmäßig für das eingeschlossene Volumen und die Verweilzeit der Masse in der Kühlzone 6 gelten. In der Nachwärmzone 7 wird auf jeden Fall das Volumen und die Verweilzeit erhöht.

Das Umschalten von endseitigen Kühlstufen von der Kühlzone in die Nachwärmzone wird anhand weiterer Ausführungsbeispiele nochmals verdeutlicht.

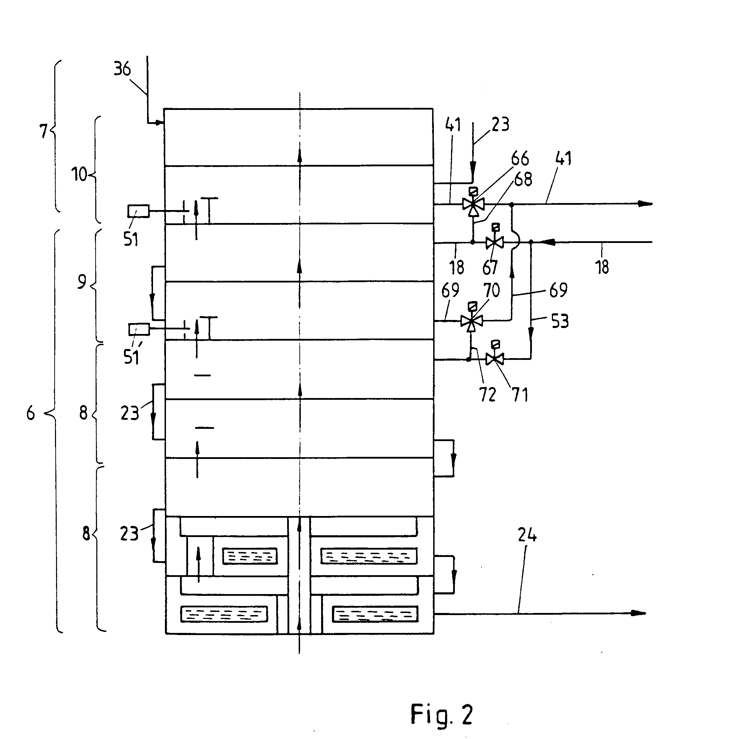

Figur 2 zeigt in schematischer Darstellung den unteren Bereich einer Temperiersäule mit einer Kühlzone 6, die zwei nicht-umschaltbare Kühlstufen 8 und 8′ sowie eine umschaltbare Kühlstufe 9 aufweist. Zur Verdeutlichung ist auch die erste Nachwärmstufe 10 der Nachwärmzone 7 dargestellt. Der Temperierkreislauf ist mit seiner Vorlaufleitung 36 an die Nachwärmzone 7 angeschlossen, wobei das Temperiermedium über Verbindungsleitungen 23 bis zur ersten Nachwärmzone 10 im Gegenstrom geführt wird und über die Rücklaufleitung 41 zu dem nicht dargestellten Mischbehälter 42 zurückströmt. In der Rücklaufleitung 41 ist ein als Magnetventil ausgebildetes Drei/Zwei-Wege-Ventil 66 angeordnet. Die Vorlaufleitung 18 des Kühlkreislaufs 17 ist endseitig an die entsprechende Kammer 15 der umschaltbaren Kühlstufe 9 angeschlossen. In dieser Vorlaufleitung 18 ist ein Magnet-Absperrventil 67 angeordnet. Eine Verbindungsleitung 68 führt von dem dritten Anschluß des Drei/Zwei-Wege-Ventils 66 zu der Vorlaufleitung 18 vor dem Magnet-Absperrventil 67. In durchaus vergleichbarer Weise ist ein Rücklaufleitungsstück 69 von der Kammer 15 der nicht-umschaltbaren Kühlstufe 8′ zu der Rücklaufleitung 41 geführt. In dieser Leitung ist wiederum ein als Magnetventil ausgebildetes Drei/Zwei-Wege-Ventil 70 angeordnet. Ein Vorlaufleitungsstück 53 des Kühlkreislaufs 17 führt von der Vorlaufleitung 18 zu der Kühlstufe 8′. In dieser Leitung ist ein Magnet-Absperrventil 71 angeordnet. Von dem dritten Anschluß des Drei/Zwei-Wegeventils 70 führt eine Verbindungsleitung 72 zu dem Vorlaufsleitungsstück 53. Am Übergang zwischen der Kühlstufe 9 und dem Beginn der Nachwärmstufe 10 ist der Fühler 51 angeordnet. Der Fühler 51′ sitzt am Übergang zwischen den Kühlstufen 8′ und 9.

Wenn die Temperiermaschine im normalen Nennleistungsbereich betrieben wird, arbeitet der Fühler 51, während der Fühler 51′ abgeschaltet ist. Über das Drei/Zwei-Wege-Ventil 66 sind die Teile der Rücklaufleitung 41 miteinander verbunden, während die Verbindungsleitung 68 abgesperrt ist. Das Magnetventil 67 ist geöffnet. Das Drei/Zwei-Wege-Ventil 70 stellt eine Verbindung zu der Verbindungsleitung 72 her, während das Magnet-Absperrventil 71 geschlossen ist. Damit wird dieser Leitungsbereich ähnlich betrieben wie eine Verbindungsleitung 23. Das Temperiermedium aus der ersten Nachwärmstufe 10 wird über die Rücklaufleitung 41 zurückgeführt. Das Kühlmedium des Kühlkreislaufs 17 wird über die Vorlaufleitung 18 der Kühlstufe 9 zugeführt und durchströmt die Kühlstufe 9, 8′ und 8 im Gegenstrom mit Hilfe der Verbindungsleitungen 23 bzw. über einen Teil des Rücklaufleitungsstücks 69, über das Drei/Zwei-Wege-Ventil 70, die Verbindungsleitung 72 und einen Teil des Vorlaufleitungsstücks 53.

Wird die Temperiermaschine mit verminderter Leistung betrieben, dann steuert nicht nur der Fühler 51′ den Temperaturregler 52, sondern es findet auch folgende Umschaltung der Ventile statt. Das Magnet-Absperrventil 67 wird geschlossen und das Magnet-Absperrventil 71 geöffnet, so daß das Kühlmedium über die sich ergebende Verbindung nicht mehr der Kühlstufe 9, sondern der Kühlstufe 8′ zugeleitet wird und letztlich von der Kühlstufe 8 über die Rücklaufleitung 24 zurückströmt. Das Drei/Zwei-Wege-Ventil 66 nimmt eine Stellung ein, in welcher das Temperiermedium von der Nachwärmstufe 10 in die umgeschaltete Kühlstufe 9, die nunmehr als weitere Nachwärmstufe dient, geleitet wird. Dies erfolgt über die Verbindungsleitung 68. Das Drei/Zwei-Wege-Ventil 70 hingegen ist auf geraden Durchgang geschaltet, so daß die Verbindungsleitung 72 abgesperrt ist. Der Rücklauf des Temperiermediums erfolgt also jetzt über das Rücklaufleitungsstück 69 und den angeschlossenen Teil der Rücklaufleitung 41.

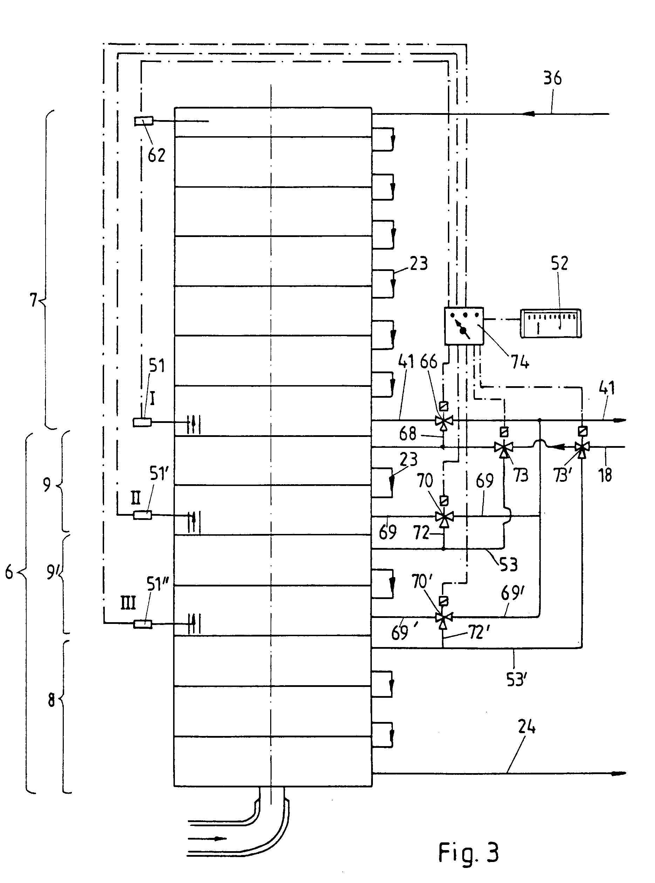

In der Ausführungsform gemäß Figur 3 wird eine weitere Möglichkeit aufgezeigt. Es sind hier zwei umschaltbare Kühlstufen 9 und 9′ vorgesehen, von denen entweder nur die Kühlstufe 9 oder aber beide Kühlstufen 9 und 9′ gemeinsam von der Kühlzone 6 auf die Nachwärmzone 7 umschaltbar sind. Demzufolge sind auch hier drei Fühler 51, 51′ und 51˝ erforderlich. In den mit der Rücklaufleitung 41 in Verbindung stehenden Leitungen sind die als Magnetventile ausgebildeten Drei/Zwei-Wege-Ventile 66, 70, 70′ vorgesehen. Ein als Magnetventil ausgebildetes Drei/Zwei-Wege-Ventil 73 ist der Kühlstufe 9 und ein Drei/Zwei-Wege-Ventil 73′ der Kühlstufe 9′ zugeordnet. Über einen Leistungsschalter 74 können drei Leistungsstufen wahlweise eingeschaltet werden. Beispielsweise ein erster Leistungsbereich, in dem die Temperiermaschine mit einer Leistung zwischen 80 und 110 % der Nennleistung betrieben wird. Ein zweiter Leistungsbereich deckt 50 bis 80 % Nennleistung und ein dritter Leistungsbereich 30 bis 50 % Nennleistung ab. Über diesen Leistungsschalter 74 werden nicht nur die Fühler 51, 51′ und 51˝ an den Temperaturregler 52 angeschlossen, sondern es erfolgt auch noch die jeweils zugehörige Umschaltung der Drei/Zwei-Wege-Ventile 66, 70, 70′ und 73, 73′. Beim Betrieb im Bereich normaler Nennleistung sind die Drei/Zwei-Wege-Ventile 66, 73, 73′ auf geraden Durchgang und die Drei/Zwei-Wege-Ventile 70 und 70′ auf abknickenden Durchgang geschaltet, so daß beide Kühlstufen 9 und 9′ der Kühlzone 6 zugeordnet sind.

Wenn die Kühlstufe 9 als Nachwärmstufe betrieben werden soll und die Kühlstufe 9′ in der Kühlzone 6 verbleibt, wird durch Umlegen des Leistungsschalters 74 anstelle des Fühler 51 der Fühler 51′ an den Temperaturregler 52 angeschlossen. Gleichzeitig schalten die Drei/Zwei-Wege-Ventile 66, 70′ und 73 auf abknickenden Durchgang, während die Drei/Zwei-Wege-Ventile 70 und 73′ auf geraden Durchgang schalten. Demzufolge erfolgt jetzt der Rücklauf des Temperiermediums über das Rücklaufleitungsstück 69 und die Rücklaufleitung 41, während das Kühlmedium aus der Vorlaufleitung 18 über die Drei/Zwei-Wege-Ventile 73 und 73′ und das Vorlaufleitungsstück 53 zu der Kühlstufe 9′ gelangt und über die Rücklaufleitung 24 zurückgeführt wird.

Bei noch niedrigerem Massedurchsatz werden beide Kühlstufen 9 und 9′ der Nachwärmzone 10 zugeschlagen. Durch Umschalten am Leistungsschalter 74 wird der Fühler 51˝ auf den Temperaturregler 52 geschaltet. Gleichzeitig schalten die Drei/Zwei-Wege-Ventile 66 und 70 und 73′ auf abknickenden Durchgang, während das Drei/Zwei-Wege-Ventil 70′ auf geraden Durchgang schaltet. Es ergeben sich, wie ersichtlich, die entsprechenden Leistungsverbindungen.

### Bezugszeichenliste:

- 1: = Antriebswelle
- 2: = Motor
- 3: = Getriebe
- 4: = Bodenplatte
- 5: = Deckplatte
- 6: = Kühlzone
- 7: = Nachwärmzone
- 8: = Kühlstufe
- 9: = Kühlstufe
- 10: = Nachwärmstufe
- 11: = Massekammer
- 12: = Durchlaßöffnung
- 13: = Durchlaßöffnung
- 14: = Rohr
- 15: = Kammer
- 16: = Kühlmedium
- 17: = Kühlkreislauf
- 18: = Vorlaufleitung
- 19: = Pumpe
- 20: = Rückschlagventil
- 21: = Manometer
- 22: = Absperrventil
- 23: = Verbindungsleitung
- 24: = Rücklaufleitung
- 25: = Mischbehälter
- 26: = Heizung
- 27: = Fühler
- 28: = Kontaktthermometer
- 29: = Frischwasserleitung
- 30: = Handabsperrventil
- 31: = Druckminderventil
- 32: = Magnetventil
- 33: = Handabsperrventil
- 34: = Temperierkreislauf
- 35: = Temperiermedium
- 36: = Vorlaufleitung
- 37: = Pumpe
- 38: = Rücklaufleitung
- 39: = Manometer
- 40: = Fühler
- 41: = Rücklaufleitung
- 42: = Mischbehälter
- 43: = Heizung
- 44: = Fühler
- 45: = Kontaktthermometer
- 46: = Anschlußleitung
- 47: = Durchflußmengenregulierventil
- 48: = Magnetventil
- 49: = Handabsperrventil
- 50: = Überlaufleitung
- 51: = Fühler
- 52: = Temperaturregler
- 53: = Vorlaufleitungsstück
- 54: = Handabsperrventil
- 55: = Handabsperrventil
- 56: = Brückenleitung
- 57: = Handabsperrventil
- 58: = Handabsperrventil
- 59: = Rückleitung
- 60: = Handabsperrventil
- 61: = Temperaturregler
- 62: = Fühler
- 63: = Anzeigevorrichtung
- 64: = Wärmeaustauschfläche
- 65: = Wärmetauschfläche
- 66: = Drei/Zwei-Wege-Ventil
- 67: = Magnet-Absperrventil
- 68: = Verbindungsleitung
- 69: = Rücklaufleitungsstück
- 70: = Drei/Zwei-Wege-Ventil
- 71: = Magnet-Absperrventil
- 72: = Verbindungsleitung
- 73: = Drei/Zwei-Wege-Ventil
- 74: = Leistungsschalter

## Patentansprüche

1. Verfahren zum kontinuierlichen Aufbereiten von zu verarbeitenden kakaobutterhaltigen oder ähnlichen fetthaltigen Massen, insbesondere Schokolademasse, in einer Temperiermaschine mit einer mehrere Kühlstufen (8, 9) aufweisenden Kühlzone (6) und einer mehrere Nachwärmstufen (10) aufweisenden Nachwärmzone (7), durch welche die Masse hindurchgeführt und dabei in der Kühlzone (6) gekühlt und in der Nachwärmzone (7) wieder erwärmt wird, dadurch gekennzeichnet, daß bei verringertem Massedurchsatz endseitig eine oder mehrere Kühlstufen (9, 9′) von der Kühlzone (6) abgetrennt und der Nachwärmzone (7) zugeschlagen werden.

2. Verfahren nach Anspruch 1, dadurch gekennzeichnet, daß von der Kühlzone (6) Kühlstufen (9, 9′) mit einer solchen Wärmeaustauschfläche (64) abgeschaltet und in die Nachwärmzone (7) einbezogen werden, daß sich ein Flächenverhältnis der Wärmeaustauschflächen (64) der Kühlzone (6) zu den Wärmeaustauschflächen der Nachwärmzone (7) im Bereich zwischen 3:2 bis 1:4 ergibt.

3. Verfahren nach Anspruch 1 oder 2, dadurch gekennzeichnet, daß die Kühlzone (6) mit einem Kühlmedium (16) großer Menge betrieben wird, welches kontinuierlich umgewälzt wird, und daß dabei bei konstanter Menge die Temperatur des Kühlmediums gesteuert bzw. geregelt wird.

4. Verfahren nach Anspruch 1 oder 2, dadurch gekennzeichnet, daß die Nachwärmzone (7) mit einem Temperiermedium (35) großer Menge betrieben wird, welches kontinuierlich umgewälzt wird, und daß dabei Menge und Temperatur des Temperiermediums konstantgehalten werden.

5. Vorrichtung zur Durchführung des Verfahrens nach Anspruch 1 bis 4, mit einer Temperiermaschine mit mehreren hintereinandergeschalteten Kühlstufen (8, 9), die jeweils Massekammern (11) und in diesen angeordnete Misch- und Rührelemente aufweisen und zusammen eine Kühlzone (6) bilden, in welcher die Masse durch Wärmeaustausch an Wärmeaustauschflächen (64) der Kühlstufen vermittels eines an einen Kühlkreislauf (17) angeschlossenen Kühlmediums (16) gekühlt und anschließend in eine Nachwärmzone (7) überführt wird, die aus mehreren hintereinandergeschalteten Nachwärmstufen (10) besteht, die jeweils Massekammern (11) und in diesen angeordnete Misch- und Rührwerkzeuge aufweisen und zusammen die Nachwärmzone (7) bilden, in welcher die Masse durch Wärmeaustausch an Wärmeaustauschflächen (65) der Nachwärmstufen (10) vermittels eines an einen Temperierkreislauf (34) angeschlossenen Temperiermediums (35) wieder erwärmt wird, dadurch gekennzeichnet, daß von der Kühlzone (6) endseitig eine oder mehrere Kühlstufen (9, 9′) von dem Kühlkreislauf (17) abtrennbar und in den Temperierkreislauf (34) der Nachwärmzone (7) einschaltbar sind.

6. Vorrichtung nach Anspruch 5, dadurch gekennzeichnet, daß die Wärmeaustauschfläche (64) der von der Kühlzone (6) abtrennbaren Kühlstufe (9) oder Kühlstufen (9, 9′) eine solche relative Größe aufweist, daß sich bei verringertem Massedurchsatz ein Flächenverhältnis der Wärmeaustauschflächen (64) der Kühlzone (6) zu den Wärmeaustauschflächen (65) der Nachwärmzone (7) im Bereich zwischen 3:2 und 1:4 ergibt.

7. Vorrichtung nach Anspruch 5 und 6, dadurch gekennzeichnet, daß jede Kühlstufe (8, 9: 8, 8′, 9; 8, 9′, 9) der Kühlzone (6) und jede Nachwärmstufe (10) der Nachwärmzone (7) hinsichtlich ihrer Wärmeaustauschfläche (64, 65), des Volumens der Massekammern (15) und der Ausbildung und Anordnung der Misch- und Rührelemente übereinstimmend ausgebildet sind.

8. Vorrichtung nach Anspruch 5 bis 7, dadurch gekennzeichnet, daß jede umschaltbare Kühlstufe (9; 9, 9′) und die endseitig vorangehende nicht-umschaltbare Kühlstufe (8; 8′) je mit einem Fühler (51, 51′; 51, 51′; 51, 51′, 51˝) für die Temperatur der Masse ausgestattet sind, die wahlweise an einen Temperaturregler (52) anschließbar sind, der ein Magnetventil (32) im Zulauf des Kühlmediums an den Kühlkreislauf (17) steuert.

9. Vorrichtung nach Anspruch 5 bis 8, dadurch gekennzeichnet, daß am Eingang des Kühlmediums (16) zu jeder umschaltbaren Kühlstufe (9; 9, 9′) ein an den Kühlkreislauf angeschlossenes Magnetventil (70; 70, 70′) vorgesehen ist, und daß am Ausgang des Kühlmediums jeder umschaltbaren Kühlstufe je ein zum Rücklauf des Temperiermediums führendes Drei/Zwei-Wege-Ventil vorgesehen ist.

10. Vorrichtung nach Anspruch 5 bis 9, dadurch gekennzeichnet, daß die Magnetventile und die Fühler für die Temperatur der Masse über einen Leistungsschalter (74) gemeinsam umschaltbar sind.

## Claims

1. A process for continuously preparing substances, containing cocoa butter or similar fats, which are to be processed, in particular chocolate substances, in a tempering machine having a cooling zone (6) comprising a plurality of cooling stages (8, 9), and a reheating zone (7) comprising a plurality of reheating stages (10), through which the substance flows and is thereby cooled in the cooling zone (6) and heated again in the reheating zone (7), characterised in that in the case of reduced through-flow of substance, one or a plurality of cooling stages (9, 9') are separated from the end of the cooling zone (6) and added to the reheating zone (7).

2. A process according to claim 1, characterised in that cooling stages (9, 9') with such a heat exchange surface (64) are switched from the cooling zone (6) and are incorporated into the reheating zone (7), that a surface area ratio of the heat exchange surfaces (64) of the cooling zone (6) to the heat exchange surfaces of the reheating zone (7) of the order of 3:2 to 1:4 is produced.

3. A process according to claim 1 or 2, characterised in that the cooling zone (6) is operated with a large quantity of cooling medium (16) which is continuously circulated, and that when the quantity is constant, the temperature of the cooling medium is controlled and/or adjusted.

4. A process according to claim 1 or 2, characterised in that the reheating zone (7) is operated with a large quantity of tempering medium (35) which is continuously circulated and that the quantity and temperature of the tempering medium are thus kept constant.

5. A device for carrying out the process according to claims 1 to 4, with a tempering machine having a plurality of cooling stages (8, 9) connected one after the other, which respectively comprise substance chambers (11) and mixing and stirring elements disposed therein and together form a cooling zone (6) in which the substance is cooled by heat exchange on heat exchange surfaces (64) of the cooling stages by means of a cooling medium (16) flowing in a cooling circuit (17) and is subsequently transferred into a reheating zone (7) which consists of a plurality of reheating stages (10) connected one after the other, which respectively comprise substance chambers (11) and mixing and stirring elements disposed therein and together form the reheating zone (7), in which the substance is again heated by heat exchange on heat exchange surfaces (65) of the reheating stages (10) by means of a tempering medium (35) flowing in a tempering circuit (34), characterised in that from the end of the cooling zone (6) one or a plurality of cooling stages (9, 9') can be separated from the cooling circuit (17) and can be switched over into the tempering circuit (34) of the reheating zone (7).

6. A device according to claim 5, characterised in that the heat exchange surface (64) of the cooling stage (9) or cooling stages (9, 9') which can be separated from the cooling zone (6) is of such a relative size that, in the case of reduced through-flow of substance, a surface area ratio of the heat exchange surfaces (64) of the cooling zone (6) to the heat exchange surfaces (65) of the reheating zone (7) of the order of 3:2 to 1:4 is produced.

7. A device according to claims 5 and 6, characterised in that each cooling stage (8, 9: 8, 8', 9; 8, 9', 9) of the cooling zone (6) and each reheating stage (10) of the reheating zone (7) are formed to correspond to each other with respect to their heat exchange surface (64, 65), to the volume of the substance chambers (15) and to the formation and arrangement of the mixing and stirring elements.

8. A device according to claims 5 to 7, characterised in that each switchable cooling stage (9; 9, 9') and the non-switchable cooling stages (8; 8') preceding them at the end are each provided with a sensor (51, 51'; 51, 51'; 51, 51'; 51'') for the temperature of the substance, which can be selectively connected to a temperature control device (52), which controls a solenoid valve (32) in the inlet for the cooling medium on the cooling circuit (17).

9. A device according to claims 5 to 8, characterised in that at the inlet of the cooling medium (16) to each switchable cooling stage (9; 9, 9'), a solenoid valve (70; 70, 70') is provided connected to the cooling circuit, and that at the outlet of the cooling medium of each switchable cooling stage, a three port two position valve is respectively provided leading to the return line of the tempering medium.

10. A device according to claims 5 to 9, characterised in that the solenoid valves and the sensors for the temperature of the substance can be switched over together by means of a power switch.

## Revendications

1. Procédé pour la préparation continue de matières contenant du beurre de cacao ou des graisses analogues destinées à être affinées, en particulier du chocolat, dans une machine de thermo-régulation ayant une zone de refroidissement (6) comportant plusieurs cellules de refroidissement (8, 9) et ayant une zone de réchauffage (7) comportant plusieurs cellules de réchauffage (10), à travers laquelle est alimentée la matière de telle sorte que celle-ci soit refroidie dans la zone de refroidissement (6) et soit réchauffée dans la zone de réchauffage (7), caractérisé en ce que pour un débit de matière réduit une ou plusieurs cellules de refroidissement (9, 9') sont séparées de la zone de refroidissement (6) et sont reliées à la zone de réchauffage (7).

2. Procédé selon la revendication 1, caractérisé en ce que des cellules de refroidissement (9, 9') comportant des surfaces d'échange thermique (64) sont séparées de la zone de refroidissement (6) et sont reliées à la zone de réchauffage (7), de telle sorte que le rapport de surface des surfaces d'échange thermique (64) de la zone de refroidissement (6) sur les surfaces d'échange thermique de la zone de réchauffage (7) soit situé dans une plage comprise entre 3/2 et 1/4.

3. Procédé selon la revendication 1 ou 2, caractérisé en ce que la zone de refroidissement (6) fonctionne avec une quantité importante de milieu de refroidissement (16) qui est mise en circulation de manière continue, et en ce que la température du milieu de refroidissement est commandée, c'est-à-dire régulée, pour une quantité constante.

4. Procédé selon la revendication 1 ou 2, caractérisé en ce que la zone de réchauffage (7) fonctionne à l'aide d'une quantité importante de milieu de thermo-régulation (35), qui est mise en circulation de manière continue, et en ce que la quantité et la température du milieu de thermo-régulation sont maintenues constantes.

5. Dispositif pour la mise en application du procédé selon les revendications 1 à 4, comportant une machine de thermo-régulation comportant plusieurs cellules de refroidissement (8, 9) reliées les unes aux autres comportant chacune des compartiments (11) à matière ainsi que des éléments formant mélangeurs et agitateurs agencés dans ceux-ci et formant ensemble une zone de refroidissement (6), dans laquelle la matière est refroidie par échange thermique au niveau de surfaces d'échange thermique (64) situées dans les cellules de refroidissement par l'intermédiaire d'un milieu de refroidissement (16) contenu dans un circuit de refroidissement (17) puis est alimentée vers une zone de réchauffage (7) qui est constituée de plusieurs cellules de réchauffage (10) reliées les unes aux autres, comportant chacune des compartiments (11) à matière ainsi que des accessoires formant mélangeurs et agitateurs agencés dans ceux-ci et formant ensemble la zone de réchauffage (7), dans laquelle la matière est réchauffée par échange thermique au niveau de surfaces d'échange thermique (65) situées dans les cellules de réchauffage (10) par l'intermédiaire d'un milieu de thermo-régulation (35) circulant dans un circuit de thermo-régulation (34), caractérisé en ce qu'une ou plusieurs cellules de refroidissement (9, 9') de la zone de refroidissement (6) peuvent être séparées du circuit de refroidissemént (17) et peuvent être basculées sur le circuit de thermo-régulation (34) de la zone de réchauffage (7).

6. Dispositif selon la revendication 5, caractérisé en ce que les surfaces d'échange thermique (64) de la cellule de refroidissement (9) ou des cellules de refroidissement (9, 9') pouvant être séparées de la zone de refroidissement (6) ont des dimensions relatives telles que pour un débit réduit de la matière le rapport de surface des surfaces d'échange thermique (64) de la zone de refroidissement (6) sur les surfaces d'échange thermique (65) de la zone de réchauffage (7) est situé dans une plage comprise entre 3/2 et 1/4.

7. Dispositif selon les revendications 5 et 6, caractérisé en ce que chaque cellule de refroidissement (8, 9; 8, 8', 9; 8, 9', 9) de la zone de refroidissement (6) et chaque cellule de réchauffage (10) de la zone de réchauffage (7) sont configurées de manière correspondante en ce qui concerne leurs surfaces d'échange thermique (64, 65), le volume des compartiments (15) à matière et la configuration et l'agencement des éléments formant mélangeurs et agitateurs.

8. Dispositif selon les revendications 5 à 7, caractérisé en ce que les cellules de refroidissement convertibles (9; 9, 9') et les cellules de refroidissement non convertibles (8; 8') agencées côté sortie comportent chacune un détecteur (51, 51'; 51, 51'; 51, 51', 51'') pour mesurer la température de la matière, lesquels peuvent être reliés de manière sélective à un thermo-régulateur (52) qui commande une vanne magnétique (32) située dans le trajet d'écoulement du milieu de refroidissement au niveau du circuit de refroidissement (17).

9. Dispositif selon les revendications 5 à 8, caractérisé en ce qu'au ni veau de l'entrée du milieu de refroidissement (16) dans chacune des cellules de refroidissement convertibles (9; 9, 9') est agencée une vanne magnétique (70; 70, 70') disposée dans le circuit de refroidissement, et en ce qu'au niveau de la sortie du milieu de refroidissement de chaque cellule de refroidissement convertible est prévue une vanne à trois orifices/deux passages pour l'écoulement retour du milieu de thermo-régulation.

10. Dispositif selon les revendications 5 à 9, caractérisé en ce que la vanne magnétique et le détecteur destiné à détecter la température de la matière peuvent être commutés mutuellement à l'aide d'un dispositif (74) de sélection de puissance.
